# EUROPEAN PATENT APPLICATION

(11) **EP 4 079 700 A1**
(43) Date of publication of application: **26.10.2022**
(21) Application number: 21170159.4
(22) Date of filing: 23.04.2021
(51) Int. Cl.: C04B 28/02, C04B 40/00

(54) **AQUEOUS ADMIXTURE FOR INORGANIC BINDER COMPOSITION**

(71) Applicant: Sika Technology AG, 6340 Baar (CH)
(72) Inventor: LOOTENS, Didier, 8700 Küsnacht (CH); HAUGUEL, Lolita, 76000 Rouen (FR); LIARD, Maxime, 8050 Zürich (CH)
(74) Representative: Sika Patent Attorneys

(57) **Abstract**

The present invention pertains to an aqueous admixtures for inorganic binder compositions such as concrete or mortar comprising
a) 25 - 55, preferably 30 - 50 weight-%, especially 40 - 45 weight-% of at least one anionic polymer selected from the group consisiting of plasticizers, water reducers, superplasticizers and workability retainers for inorganic binders,
b) 15 - 35 weight-%, preferably 20 - 30 weight-% of at least one water insoluble liquid defoamer, and
c) 1 - 10 weight-%, preferably 2 - 5 weight-% of at least one retarder, based on 100 weight-% of the aqueous composition. Especially, the admixture of the present invention is useful in the field of additive manufacturing.

## Description

### Technical Field

The present invention pertains to the field of aqueous admixtures for inorganic binder compositions such as concrete or mortar. Especially, the admixture of the present invention is useful in the field of additive manufacturing.

### Background of the Invention

Admixtures for inorganic binder compositions like concrete or mortar, are widely used to improve the quality of the fresh and hardened material, for example to improve certain targeted properties such as the strength, flow, water tightness, chemical resistance, and others. Admixtures typically comprise more than one, for example two, three, or four, different chemicals, each of which functions to improve at least one of the targeted properties. Most of the admixtures currently available are used as aqueous solutions or dispersions.

In the field of mixing inorganic binder compositions it is typically necessary to use a variety of different additives to adjust the properties of the inorganic binder compositions. This is for example the case where the inorganic binder compositions are cementitious compositions, e.g. concrete or mortar. Especially in the field of additive manufacturing, which includes 3D-printing, of inorganic binder compositions various additives have to be used. Typical requirements in processes of additive manufacturing are that inorganic binder compositions must be pumped over long distances, be dispensed at high speed in layers, and quickly cure to support their own weight and the weight of subsequent layers applied on top. The latter is especially true where no formwork is used in the process of additive manufacturing. Various additives are needed to enable and facilitate these requirements. The dosing of various additives such as dispersants, rheology modifiers, and strength enhancers poses additional requirements on the equipment. For example, it will be necessary to include several dosing units with pumps, valves, metering devices, mixing units, etc. It is therefore generally desirable to combine several additives into one admixture.

Admixtures comprising cement dispersants and defoamers are for example disclosed in WO2020/016072.

Admixtures suitable for the use in additive manufacturing with cementitious materials are for example disclosed in WO2020/187740.

In the alternative, it would be necessary, to add all additives to a dry pre-mix of the inorganic binder composition. However, this limits the type of additives which can be used because they have to be in a dry state and they have to be compatible with the other constituents of the inorganic binder composition during storage. Additionally, where the additives form part of the dry pre-mix, their dosage cannot be adjusted easily according to the needs of a specific application.

There is thus a constant need for improved admixtures and especially for improved admixtures suitable for additive manufacturing using inorganic binder compositions.

### Summary of the Invention

It is an object of the present invention to provide an admixture useful for inorganic binder compositions, in particular for additive manufacturing applications. Especially, an admixture of the present invention should provide one or more of the following advantages:
(i) reduce the amount of mixing water needed for an inorganic binder composition,
(ii) increase the open time of the inorganic binder composition,
(iii) reduce the shrinkage of an inorganic binder composition,
(iv) facilitate mixing of an inorganic binder composition with an accelerator, especially with a liquid accelerator based on aluminum sulfate,
(v) reduce and/or stabilize the viscosity of an inorganic binder composition
(vi) reduce the air content of an inorganic binder composition,
(vii) increase the mechanical strength of an inorganic binder composition,
(viii) facilitate a process of additive manufacturing with inorganic binder compositions.

Surprisingly, the above defined objectives are at least partially, in preferred embodiments fully, achieved by an aqueous composition as claimed in claim 1.

Further aspects of the invention are subject of further independent claims. Specially preferred embodiments are subject of the dependent claims.

### Detailed Description of the Invention

In a first aspect the present invention relates to an aqueous composition, preferably an aqueous emulsion, comprising
a) 25 - 55, preferably 30 - 50 weight-%, especially 40 - 45 weight-% of at least one anionic polymer selected from the group consisiting of plasticizers, water reducers, superplasticizers and workability retainers for inorganic binders,
b) 15 - 35 weight-%, preferably 20 - 30 weight-% of at least one water insoluble liquid defoamer, and
c) 1 - 10 weight-%, preferably 2 - 5 weight-% of at least one retarder, based on 100 weight-% of the aqueous composition.

Water may be present in an amount to sum up to 100 weight%.

The aqueous composition of the present invention preferably is an aqueous emulsion. An aqueous emulsion can be an oil in water (o/w) emulsion or a water in oil (w/o) emulsion or an emulsion consisting of dispersed phases dispersed in a medium such as a water in oil in water (w/o/w) emulsion. Preferably, the continuous phase of an aqueous emulsion of the present invention is water.

An aquoeus composition, preferably an emulsion, of the present invention preferably is liquid. An aqueous composition, preferably an emulsion thus, preferably, is not in the form of a paste. The viscosity of an aqueous composition, preferably an emulsion, of the present invention preferably is between 1 and 10000 mPa·s when measured at 20°C at a shear rate of 0.1 s⁻¹.

The aqueous composition of the present invention comprises at least one anionic polymer selected form the group consisting of plasticizers, water reducers, superplasticizers and workability retainers for inorganic binders. Plasticizers, water reducers, superplasticizers and workability retainers for inorganic binders are known to the person skilled in the art. Exemplary anionic polymers are lignosulfonates, sulfonated naphthalene formaldehyde condensates, sulfonated melamine formaldehyde condensates, sulfonated vinyl copolymers, polyalkylene glycols comprising phosphonate groups, polyalkylene glycols comprising phosphate groups, polycarboxylates or anionic comb-polymers comprising polyalkylene glycol side chains.

According to embodiments, the aqueous composition of the present invention comprises only one anionic polymer. According to further embodiments, the aqueous composition of the present invention comprises two anionic polymers. According to still further embodiments, the aqueous composition of the present invention comprises three or more anionic polymers.

The anionic polymer preferably comprises at least one anionic group selected from the group consisting of -COO⁻, -SO₂-O⁻, -O-PO(O⁻)₂ and -PO(O⁻)₂ - groups, in each case with a counter ion M which may be selected from H⁺, an alkali metal ion, an earth alkali metal ion, a di- or trivalent metal ion, an ammonium ion or an organic ammonium group, preferably H⁺ and/or an alkali metal ion.

According to especially preferred embodiments, the at least one anionic polymer is a copolymer having a polymer backbone and side chains bonded thereto, the copolymer comprising at least one ionizable monomer unit **M1** and at least one side chain-bearing monomer unit **M2.**

The ionizable monomer unit **M1** in the copolymer preferably has a structure of the formula I 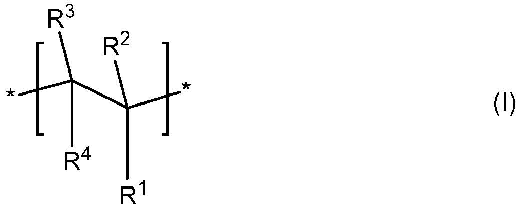 and the side chain-bearing monomer unit **M2** preferably has a structure of the formula II 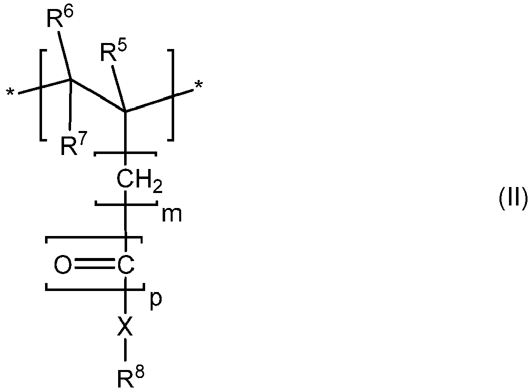 Where
R¹, in each case independently, is -COOM, -SO₂-OM, -O-PO(OM)₂ and/or - PO(OM)₂,
R², R³, R⁵ and R⁶, in each case independently, are H or an alkyl group having 1 to 5 carbon atoms,
R⁴ and R⁷, in each case independently, are H, -COOM or an alkyl group having 1 to 5 carbon atoms,
or where R¹ forms a ring together with R⁴ to give -CO-O-CO-,
M, independently of one another, represents H⁺, an alkali metal ion, an alkaline earth metal ion, a di- or trivalent metal ion, an ammonium ion or an organic ammonium group;
m = 0, 1 or 2,
p = 0 or 1,
X, in each case independently, is -O- or -NH-,
R⁸ is a group of the formula -[AO]ₙ-R^{a}
where A = C₂- to C₄-alkylene, R^{a} is H, a C₁- to C₂₀-alkyl group, -cycloalkyl group or -alkylaryl group,
and n = 2-250, especially 10-200.

Especially preferred examples of copolymers of the present invention are polycarboxylate ethers or polycarboxylate esters (PCE).

A molar ratio of the monomer units **M1** to the monomer units **M2** is advantageously in the range of 0.5-6, especially 0.7-4, preferably 0.9-3.8, further preferably 1.0-3.7 or 2-3.5.

More particularly, R¹ = COOM, R² = H or CH₃, R³ = R⁴ = H. It is thus possible to prepare the copolymer on the basis of acrylic or methacrylic acid monomers, which is of interest from an economic point of view. Moreover, copolymers of this kind in the present context result in a particularly good dispersing effect.

Likewise advantageously, R¹ = COOM, R² = H, R³ = H and R⁴ = COOM. Corresponding copolymers can be prepared on the basis of maleic acid monomers.

The X group in the ionizable monomer units **M2,** advantageously in at least 75 mol%, particularly in at least 90 mol%, especially in at least 95 mol% or at least 99 mol% of all monomer units **M2,** is -O- (= oxygen atom).

Advantageously, R⁵ = H or CH₃, R⁶ = R⁷ = H and X = -O-. It is thus possible to prepare the copolymers, for example, from (meth)acrylic esters, vinyl ethers, (meth)allyl ethers or isoprenol ethers.

In a particularly advantageous embodiment, R² and R⁵ are each mixtures of 40-60 mol% of H and 40-60 mol% of -CH₃.

In a further advantageous embodiment, R¹ = COOM, R² = H, R⁵ = -CH₃ and R³ = R⁴ = R⁶ = R⁷ = H.

In another advantageous embodiment, R¹ = COOM, R² = R⁵ = H or -CH₃ and R³ = R⁴ = R⁶ = R⁷ = H.

Especially suitable copolymers are those in which R¹ = COOM; R² and R⁵ are each independently H, -CH₃ or mixtures thereof; R³ and R⁶ are each independently H or -CH₃, preferably H; R⁴ and R⁷ are each independently H or -COOM, preferably H.

The R⁸ radical in the side chain-bearing monomer units **M2,** based on all the R⁸ radicals in the monomer units, consists of a polyethylene oxide especially to an extent of at least 50 mol%, especially at least 75 mol%, preferably at least 95 mol% or at least 99 mol%.

A proportion of ethylene oxide units based on all the alkylene oxide units in the copolymer is especially more than 75 mol%, especially more than 90 mol%, preferably more than 95 mol% and specifically 100 mol%.

More particularly, R⁸ has essentially no hydrophobic groups, especially no alkylene oxides having three or more carbon atoms. This especially means that a proportion of alkylene oxides having three or more carbon atoms based on all the alkylene oxides is less than 5 mol%, especially less than 2 mol%, preferably less than 1 mol% or less than 0.1 mol%. In particular, there are no alkylene oxides having three or more carbon atoms or the proportion thereof is 0 mol%.

R^{a} is advantageously H and/or a methyl group. Particularly advantageously, A = C₂-alkylene and R^{a} is H or a methyl group.

More particularly, the parameter n = 10-150, especially n = 15-100, preferably n = 17-70, specifically n = 19-45 or n = 20-25. In particular, this achieves excellent dispersing effects within the preferred ranges specified.

Particular preference is given to copolymers in which R¹ = COOM; R² and R⁵, independently of one another, are H, -CH₃ or mixtures thereof; R³ and R⁶, independently of one another, are H or -CH₃, preferably H; R⁴ and R⁷, independently of one another, are H or -COOM, preferably H; and where X in at least 75 mol%, particularly in at least 90 mol%, especially in at least 99 mol%, of all monomer units **M2** is -O-.

It may further be advantageous when the copolymer comprises at least one further monomer unit **MS** which differs chemically from the monomer units **M1** and **M2.** In particular, multiple different further monomer units **MS** may be present. In this way, it is possible to further modify the properties of the copolymer and to adjust them, for example, with regard to specific applications.

Particularly advantageously, the at least one further monomer unit **MS** is a monomer unit of the formula III: 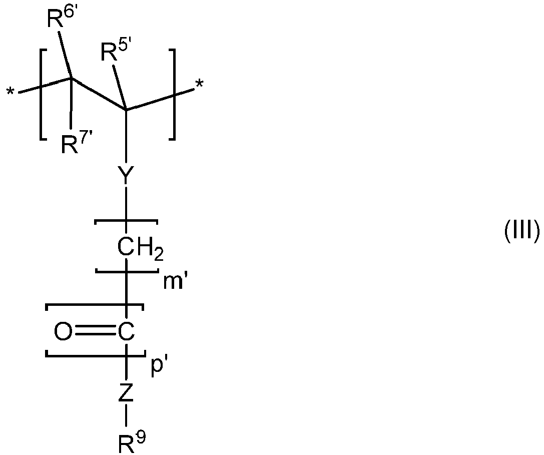 where
R^{5'}, R^{6'}, R^{7"}, m' and p' are the same as defined for R⁵, R⁶, R⁷, m and p as described above in the context of the copolymer;
Y, in each case independently, is a chemical bond or -O-;
Z, in each case independently, is a chemical bond, -O- or -NH-;
R⁹, in each case independently, is an alkyl group, cycloalkyl group, alkylaryl group, aryl group, hydroxyalkyl group or acetoxyalkyl group, each having 1-20 carbon atoms.

The mass averaged molecular weight (M_{w}) of copolymers of the present invention, measured with SEC against polyethylene glycol standards with 0.1 N NaNO₃ at pH 12 as eluent, is preferably 5'000 to 200'000 g/mol, more preferred 8'000 to 150'000 g/mol, especially preferred 10'000 to 130'000 g/mol, particularly 12'000 to 80'000 g/mol.

Copolymers of the present invention can be produced by free radical copolymerisation of monomers **M1** and **M2** and optionally **MS.** Exemplary polymers are for example described in EP2522680.

It is also possible to produce a copolymer of the present invention by polymer analogous esterification and/or amidation of polymers comprising carboxylic acid groups with at least one polyalkylene glycol that comprises a hydroxyl- or an amino group at one end. Exemplary polymers are for example described in EP1138697.

According to embodiments, the aqueous composition of the present invention comprises at least one anionic polymer which has a nonrandom distribution of the monomer units **M1** and/or the monomer units **M2** in a direction along the polymer backbone. A "nonrandom distribution" is understood in the present case to mean a nonstatistical distribution of the monomer units **M1** and/or the monomer units **M2.** This means that the ionizable monomer units **M1** and/or the side chain-bearing monomer units **M2** are arranged in the copolymer, for example, in an alternating or block-type manner and/or in a gradient structure.

The structure of the copolymers can be analyzed and determined, for example, by nuclear spin resonance spectroscopy (NMR spectroscopy). By ¹³C and ¹H NMR spectroscopy in particular, it is possible in a manner known per se to determine the sequence of the monomer units in the copolymer on the basis of neighboring group effects in the copolymer and using statistical evaluations.

According to embodiments, a copolymer of the present invention is characterized by a nonrandom distribution of monomers **M1** and **M2** in the copolymer in form of blocks, wherein the ionizable monomer units **M1** are present essentially in at least one first block **A** and the side chain-bearing monomer units **M2** are present essentially in at least one second block **B.**

More particularly, any proportion of monomer units **M2** present in the first block **A** is less than 25 mol%, especially not more than 10 mol%, based on all the monomer units **M1** in the first block **A,** and any proportion of monomer units **M1** present in the second block **B** is less than 25 mol%, especially not more than 10 mol%, based on all the monomer units **M2** in the second block **B.**

The at least one first block **A** advantageously comprises 5-70, especially 7-40, preferably 10-25, monomer units **M1** and/or the at least one second block **B** comprises 5-70, especially 7-50, preferably 20-40, monomer units **M2.**

According to further embodiments, a copolymer of the present invention is characterized by a nonrandom distribution of monomers **M1** and **M2** in the copolymer in form of a gradient structure in at least one section **AA** in a direction along the polymer backbone with respect to the molar ratio of the ionizable monomer unit **M1** to the side chain-bearing monomer unit **M2.**

The term "gradient structure" or "concentration gradient" in the present case especially describes a continuous change in the local concentration of a monomer unit in at least one section in a direction along the copolymer backbone.

The concentration gradient may, for example, be essentially constant. This corresponds to a linear decrease or increase in the local concentration of the respective monomer unit in the at least one section **AA** in the direction of the copolymer backbone. However, it is also possible that the concentration gradient changes in the direction of the copolymer backbone. In this case, there is a nonlinear decrease or increase in the local concentration of the respective monomer unit. The concentration gradient extends especially over at least 10, especially at least 14, preferably at least 20 or at least 40, monomer units of the copolymer. By contrast, abrupt or sharp changes in concentration of monomers as occur, for example, in the case of block copolymers are not referred to as a concentration gradient.

The expression "local concentration" in the present context refers to the concentration of a particular monomer at a given point in the polymer backbone. In practice, the local concentration or the mean of the local concentration can be ascertained, for example, by determining the monomer conversions during the preparation of the copolymer. In this case, the monomers converted within a particular period can be ascertained. The averaged local concentration especially corresponds to the ratio of the mole fraction of a particular monomer converted within the period of time in question to the total molar amount of the monomers converted within the period of time in question.

The conversions of the monomers can be determined in a manner known per se, for example, with the aid of liquid chromatography, especially high-performance liquid chromatography (HPLC), and taking account of the amounts of monomers used. The structure of the copolymers can also be determined as set out above by ¹³C and ¹H NMR spectroscopy.

Exemplary block or gradient copolymers are for example described in WO2017/050902 and WO2017/050907.

According to preferred embodiments, an aqueous composition of the present invention comprises two anionic polymers, especially two copolymers having a polymer backbone and side chains bonded thereto, the copolymers comprising at least one ionizable monomer unit **M1** and at least one side chain-bearing monomer unit **M2.** The two anionic polymers, especially two copolymers, differ in their chemical composition and/or polymer structure.

According to especially preferred embodiments, an aqueous composition of the present invention comprises a first and a second anionic polymer, each anionic polymer being a copolymer having a polymer backbone and side chains bonded thereto, each copolymer comprising at least one ionizable monomer unit **M1** and at least one side chain-bearing monomer unit **M2,** wherein the first anionic polymer has a random distribution of the monomer units **M1** and/or the monomer units **M2** in a direction along the polymer backbone, and wherein the second anionic polymer has a nonrandom distribution of the monomer units **M1** and/or the monomer units **M2** in a direction along the polymer backbone.

An aqueous composition of the prest invention comprises at least one water insoluble liquid defoamer. The term "water insoluble" in this document refers to a property of a substance that does not fully dissolve when added with more than 0.6 g to 100 g of distilled water at 20°C. It may be of advantage if the water insoluble liquid defoamer is mixed with a non-ionic emulsifying agent before it is added to the aqueous composition. Preferred is a weight-ratio of 80 to 99.5 parts of insoluble defoamer with 0.5 to 20 parts of non-ionic emulsifying agent giving 100 parts of the pre-mix. This may further improve the stability of the aqueous composition.

According to embodiments, the water insoluble defoamer is selected from the group consisting of mineral oils, vegetable oils, or white oils which may comprise a wax and/or hydrophobic silica, silicones, which can be modified by alkoxylation or fluorination, alkyl esters of phosphoric or phosphonic acid, especially triisobutyl phosphate or tributyl phosphate, alkoxylated polyols, especially ethoxylated diols, fatty acid based defoamers, especially mono- and diglycerides of fatty acids, and alkoxylated fatty alcohols.

An aqueous composition of the prest invention comprises at least one retarder. A retarder in the context of the present invention is an additive for inorganic binder compositions which delays the hydration reaction of said inorganic binder compositions after the addition of mixing water as compared to a reference without any such retarder added. Set retarders are described in more detail in standard EN 934-2:2012-08, table 8.

According to embodiments, the at least one retarder is selected from the group consisting of sugar acids, sugars, sugar alcohols, and hydroxycarboxylic acids.

A "sugar acid" in the context of the present invention is a monosaccharide with a carboxyl group. It may belong to any of the classes of aldonic acids, ulosonic acids, uronic acids or aldaric acids. Preferably, it is an aldonic acid. Examples for sugar acids useful in the context of the present invention include but are not limited to glyceric acid, xylonic acid, gluconic acid, ascorbic acid, neuraminic acid, glucuronic acid, galacturonic acid, iduronic acid, tartaric acid, mucic acid, and saccharic acid. The sugar acid may be present in form of the free acid or as a salt. According to embodiments, salts of sugar acids can be salts with metals of groups la, IIa, Ib, lib, IVb, Vlllb of the periodic table of elements. Preferred salts of sugar acids are salts of alkali and alkali earth metals, iron, cobalt, copper, or zinc. Especially preferred are salts with monovalent metals such as lithium, sodium, and potassium.

A "sugar" in the context of the present invention is a carbohydrate bearing an aldehyde group. In particularly preferred embodiments the sugar belongs to the group of monosaccharides or disaccharides. Examples of sugars include but are not limited to glyceric aldehyde, threose, erythrose, xylose, lyxose, ribose, arabinose, allose, altrose, glucose, mannose, gulose, idose, galactose, tallose, fructose, sorbose, lactose, maltose, sucrose, lactulose, trehalose, cellobiose, chitobiose, isomaltose, palatinose, mannobiose, raffinose, and xylobiose.

A "sugar alcohol" in the context of the present invention is a polyhydric alcohol derivable from sugars by a redox reaction. Sugar alcohols thus belong to the class of alditols. Examples for sugar alcohols include but are not limited to ethylene glycol, glycerol, diglycerol, threitol, erythritol, pentaerythritol, dipentaerythritol, xylitol, ribitol, arabitol, sorbitol, sorbitan, isosorbide, mannitol, dulcitol, fucitol, iditol, inositol, volemitol, lactitol, maltitol, isomalt, maltotriitol, maltotetraitol, and polyglycitol.

A "hydroxycarboxylic acid" in the context of the present invention is a carboxylic acid additionally comprising an OH-moiety within the same molecule. Examples for hydroxycarboxylic acids include but are not limited to malic acid, citric acid, isocitric acid, tartronic acid, mandelic acid, salicylic acid, tartaric acid, and lactic acid. The hydroxycarboxylic acid may be present in form of the free acid or as a salt. According to embodiments, salts of hydroxycarboxylic acids can be salts with ammonium or with metals of groups la, IIa, Ib, lib, IVb, Vlllb of the periodic table of elements. Preferred salts of hydroxycarboxylic acids are alkali metal salts, earth alkali metal salts or ammonium salts.

Preferred retarders are citric acid, tartaric acid, lactic acid, and gluconic acid and their salts. An especially preferred retarder is sodium gluconate.

An aqueous composition of the present invention may additionally comprise further constituents. Further constituents may be selected from surfactants, accelerators, shrinkage reducers, colouring agents, rheology modifiers, pumping aids, biocides, and corrosion inhibitors. Advantageously, the aqueous composition additionally comprises a biocide in sufficient amount to avoid bacterial and/or fungicidal growth.

According to some embodiments, an aqueous composition of the present invention additionally comprises 5 - 15 weight-%, preferably 8 - 12 weight-% of a cationic linear polyamine, based on 100 weight-% of the aqueous composition. Such cationic linear polyamines are available from the company SNF under the tradename Floquat^{™}.

According to embodiments, the aqueous composition comprises:
a) 25 - 55, preferably 30 - 50 weight-%, especially 40 - 45 weight-% of at least one anionic polymer which is a copolymer having a polymer backbone and side chains bonded thereto, the copolymer comprising at least one ionizable monomer unit **M1** and at least one side chain-bearing monomer unit **M2,**
b) 15 - 35 weight-%, preferably 20 - 30 weight-% of at least one water insoluble liquid defoamer selected from the group consisting of mineral oils, vegetable oils, or white oils which may comprise a wax and/or hydrophobic silica, silicones, which can be modified by alkoxylation or fluorination, alkyl esters of phosphoric or phosphonic acid, especially triisobutyl phosphate or tributyl phosphate, alkoxylated polyols, especially ethoxylated diols, fatty acid based defoamers, especially mono- and diglycerides of fatty acids, and alkoxylated fatty alcohols, and
c) 1 - 10 weight-%, preferably 2 - 5 weight-% of at least one retarder selected from the group consisting of sugar acids, sugars, sugar alcohols, and hydroxycarboxylic acids,
   based on 100 weight-% of the aqueous composition.

In the above embodiment, water may be present in an amount to sum up to 100 weight%.

According to embodiments, the aqueous composition consists of:
a) 25 - 55, preferably 30 - 50 weight-%, especially 40 - 45 weight-% of at least one anionic polymer which is a copolymer having a polymer backbone and side chains bonded thereto, the copolymer comprising at least one ionizable monomer unit **M1** and at least one side chain-bearing monomer unit **M2,**
b) 15 - 35 weight-%, preferably 20 - 30 weight-% of one water insoluble liquid defoamer selected from the group consisting of mineral oils, vegetable oils, or white oils which may comprise a wax and/or hydrophobic silica, silicones, which can be modified by alkoxylation or fluorination, alkyl esters of phosphoric or phosphonic acid, especially triisobutyl phosphate or tributyl phosphate, alkoxylated polyols, especially ethoxylated diols, fatty acid based defoamers, especially mono- and diglycerides of fatty acids, and alkoxylated fatty alcohols, and
c) 1 - 10 weight-%, preferably 2 - 5 weight-% of one retarder selected from the group consisting of sugar acids, sugars, sugar alcohols, and hydroxycarboxylic acids,
d) optionally 5 - 15 weight-%, preferably 8 - 12 weight-% of a cationic linear polyamine
based on 100 weight-% of the aqueous composition.

In the above embodiment, water may be present in an amount to sum up to 100 weight%.

According to embodiments, the aqueous composition is an oil in water emulsion comprising:
a) 25 - 55, preferably 30 - 50 weight-%, especially 40 - 45 weight-% of two anionic polymers, the two anionic polymers being chemically and/or structurally different, wherein at least one, preferably both, of the two anionic polymers is a copolymer having a polymer backbone and side chains bonded thereto, the copolymer comprising at least one ionizable monomer unit **M1** and at least one side chain-bearing monomer unit **M2,**
b) 15 - 35 weight-%, preferably 20 - 30 weight-% of at least one water insoluble liquid defoamer selected from the group consisting of mineral oils, vegetable oils, or white oils which may comprise a wax and/or hydrophobic silica, silicones, which can be modified by alkoxylation or fluorination, alkyl esters of phosphoric or phosphonic acid, especially triisobutyl phosphate or tributyl phosphate, alkoxylated polyols, especially ethoxylated diols, fatty acid based defoamers, especially mono- and diglycerides of fatty acids, and alkoxylated fatty alcohols, and
c) 1 - 10 weight-%, preferably 2 - 5 weight-% of at least one retarder selected from the group consisting of sugar acids, sugars, sugar alcohols, and hydroxycarboxylic acids,
based on 100 weight-% of the aqueous composition.

In the above embodiment, water may be present in an amount to sum up to 100 weight%.

According to embodiments, the aqueous composition consists of:
a) 25 - 55, preferably 30 - 50 weight-%, especially 40 - 45 weight-% of a first and a second anionic polymer, each anionic polymer being a copolymer having a polymer backbone and side chains bonded thereto, each copolymer comprising at least one ionizable monomer unit **M1** and at least one side chain-bearing monomer unit **M2,** wherein the first anionic polymer has a random distribution of the monomer units **M1** and/or the monomer units **M2** in a direction along the polymer backbone,
   and wherein the second anionic polymer has a nonrandom distribution of the monomer units **M1** and/or the monomer units **M2** in a direction along the polymer backbone,
b) 15 - 35 weight-%, preferably 20 - 30 weight-% of one water insoluble liquid defoamer selected from the group consisting of mineral oils, vegetable oils, or white oils which may comprise a wax and/or hydrophobic silica, silicones, which can be modified by alkoxylation or fluorination, alkyl esters of phosphoric or phosphonic acid, especially triisobutyl phosphate or tributyl phosphate, alkoxylated polyols, especially ethoxylated diols, fatty acid based defoamers, especially mono- and diglycerides of fatty acids, and alkoxylated fatty alcohols, and
c) 1 - 10 weight-%, preferably 2 - 5 weight-% of one retarder which is sodium gluconate,
d) optionally 5 - 15 weight-%, preferably 8 - 12 weight-% of a cationic linear polyamine,
based on 100 weight-% of the aqueous composition.

In the above embodiment, water may be present in an amount to sum up to 100 weight%.

An aqueous composition of the present invention can be prepared by simply mixing all components until a homogeneous composition, preferably a homogeneous emulsion, is obtained. It is, however, preferred that an aqueous composition of the present invention is prepared by the following steps
a) mixing the at least one retarder, especially sodium gluconate, with water,
b) admixing the at least one anionic polymer to the mixture obtained in step a),
c) admixing the at least one water insoluble defoamer to the mixture obtained in step b).

Preferably, steps b) and c) are performed with the use of a high-speed mixer or a gap homogenizer.

Optionally, the at least one anionic polymer can be admixed in step b) in the form of a solution in water.

By following the steps a) - c) as described above a particularly stable aqueous composition, especially an emulsion, is obtained.

It is to be understood, that all embodiments described as preferred above also pertain to the preparation of the aqueous composition, preferably emulsion.

The aqueous composition, preferably the emulsion, of the present invention preferably is prepared, handled, and stored at a temperature between +5°C and + 60°C. Outside this temperature range there is a risk of freezing or evaporation of the water contained.

An aqueous composition of the present invention, especially an emulsion, is particularly stable over prolonged periods of time. Prolonged periods in this context relate to several weeks and months, for example up to 3 months, preferably up to 6 months, more preferably up to 12 months. In cases where settling, Ostwald ripening, or phase separations occur, an aqueous composition of the present invention, especially an emulsion, can be recycled and subsequently used simply by stirring or vigorous shaking.

In a second aspect the present invention relates to the use of the aqueous composition as described above in the preparation of an inorganic binder composition, particularly a binder compositions comprising cement.

An inorganic binder composition within the present context is a composition comprising at least one inorganic binder. Preferably, the inorganic binder composition additionally comprises at least one aggregate.

According to especially preferred embodiments, the inorganic binder is selected from the group consisting of cement, gypsum, lime, latent hydraulic binders, pozzolanes, and geopolymers. Cements in particular are Portland cements as described in standard EN 197-1, calcium aluminate cements as described in standard EN 14647, and/or calcium sulfoaluminate cements. The term "gypsum" is meant to encompass CaSO₄ in various forms, in particular CaSO₄ anhydrite, CaSO₄ α- and β- hemihydrate, and CaSO₄ dihydrate. The term "lime" is meant to encompass natural hydraulic lime, formulated lime, hydraulic lime, and air lime as described in the standard EN 459-1:2015. Pozzolanes and latent hydraulic materials preferably are selected from the group consisting of slag, clay, calcined clay, especially metakaolin, kiln dust, microsilica, fly ash, zeolite, rice husk ash, burnt oil shale, and natural pozzolane such as pumice and trass. Geopolymers are alumo-siliceous polymers. One particular example of a geopolymer is furnace slag activated with water glass.

It can be especially preferred for an inorganic binder composition to comprise more than one inorganic binder. For example, an inorganic binder composition of the present invention may comprise a mixture of a Portland cement with a calcium aluminate cement and/or a calcium sulfoaluminate cement. Another example is a mixture of a Portland cement with gypsum, and with a calcium aluminate cement and/or a calcium sulfoaluminate cement. Another example is a mixture of Portland cement, slag, and a calcium sulfoaluminate cement.

Inorganic binder compositions of the present invention preferably additionally comprise aggregates. Aggregates can be any material that is non-reactive in the hardening reaction of inorganic binders, especially in the hydration reaction. Aggregates can be any aggregate typically used for construction materials. Typical aggregates are for example rock, crushed stone, gravel, sand, especially quartz sand, river sand and/or manufactured sand, slag, recycled concrete, glass, expanded glass, hollow glass beads, glass ceramics, volcanic rock, pumice, perlite, vermiculite, quarry wastes, raw, fired or fused earth or clay, porcelain, electrofused or sintered abrasives, firing support, silica xerogels. Aggregates may also be fine aggregates or fillers such as ground limestone, ground dolomite, and/or ground aluminum oxide. Aggregates useful for the present invention can have any shape and size typically encountered for such aggregates. An especially preferred aggregate is sand. Sand is a naturally occurring granular material composed of finely divided rock or mineral particles. It is available in various forms and sizes. Examples of suitable sands are quartz sand, limestone sand, river sand or crushed aggregates. Suitable sands are for example described in standards ASTM C778 or EN 196-1.

Optionally an inorganic binder composition of the present invention additionally comprises further additives common in the construction industry. Further additives are for example surfactants, water reducers, redispersible polymer powders, fibers, accelerators, retarders, shrinkage reducers, colouring agents, rheology modifiers, pumping aids, biocides, and corrosion inhibitors. Preferably, the further additives do not comprise any of the constituents of the aqueous composition of the present invention.

The inorganic binder composition may also comprise water.

The inorganic binder composition may thus be a dry composition, for example a dry mortar or a dry concrete. The term "dry" in this context refers to a water content of not more than 5 w%, more preferably not more than 2 w%, especially not more than 1 w%.

The inorganic binder composition may also be in the wet state. Typically, wet inorganic binder compositions are in the form of slurries in water. Wet inorganic binder compositions preferably have a mass ratio of water: inorganic binder between 0.1 - 0.8, preferably 0.25 - 0.6, especially 0.3 - 0.5.

In a third aspect, the present invention relates to an inorganic binder composition comprising
a) at least one inorganic binder, preferably at least one cement,
b) at least one aggregate, preferably sand,
c) optionally at least one further additive,
d) optionally water, and
e) an aqueous composition as described above in an amount of 0.5 - 10
weight-%, preferably 1 - 5 weight-%, based on the total dry weight of the inorganic binder composition.

It is to be understood that all embodiments as described above also apply for the inorganic binder composition of the present invention.

It can be particularly preferable that the inorganic binder composition additionally comprises an accelerator. Particularly suitable accelerators are aqueous compositions based on aluminum sulfate. Such composition are for example described in EP1878713.

According to embodiments, the inorganic binder compositions comprises or consists of (each based on the total weight of the inorganic binder composition)
a) at least one inorganic binder selected from the group consisting of Portland cement, calcium aluminate cements, calcium sulphoaluminate cements, gypsum, lime or mixtures thereof in an amount of from 10 - 66 wt.-%, preferably 15 - 50 wt.-%, especially 20 - 45 wt.-%,
b) aggregates, preferably sand, in an amount of from 30 - 80 wt.-%, preferably 40 - 70 wt.-%,
c) fine filler, preferably calcium carbonate, in an amount of from 1 - 25 wt.-%, preferably 2 - 15 wt.-%,
d) optionally a pozzolanic and/or latent hydraulic material in an amount of from 1 - 25 wt.-%, preferably 2 - 10 wt.-%,
e) an aqueous composition as described above in an amount of 0.5 - 10 weight-%, preferably 1 - 5 weight-%, based on the total dry weight of the inorganic binder composition.

In a fourth aspect, the present invention relates to a method for the preparation of an inorganic binder composition as described above, characterized in that it comprises the steps of
1) providing a dry mix comprising an inorganic binder, preferably at least one cement, at least one aggregate, preferably sand, and optionally at least one further additive,
2) optionally mixing said dry mix with water,
3) mixing the dry mix or the mixture of dry mix and water with an aqueous composition as descriebd above.

Suitable devices for mixing are not particularly limited and are known to the person skilled in the art. It is preferred, that mixing is done semi-continuously or continuously. Esepcially preferred, the mixing in step 3) is done in a continuous mixing device, especially in a dynamic mixer.

According to a particularly preferred embodiment, the method as described above is part of a process of additive manufacturing, preferably of printing a 3D object. Systems and methods for 3D printing of inorganic binder compositions are for example described in WO2019/030328. Embodiments described therein are also suitable within the context of the present invention.

In a process of additive manufacturing, preferably of 3D printing, the inorganic binder composition as described above is fed, preferably by means of a pump and a conveying line, in particular a hose, to a continuous mixer. Preferably, the inorganic binder composition is a wet composition. This means that preferably, step 2) of the method as described above is present. Such wet composition can be conveyed more easily. Good conveyability is important for additive manufacturing and especially for 3D printing because it is a prerequisite for uniform application. During conveying a high pressure, especially in a hose, is disadvantageous because it greatly stresses the material, which if overloaded may burst. Compositions with good conveyability are able to prevent an excessive buildup of pressure.
According to embodiments, the aqueous composition of the present invention is added to the dry mix or to the mixture of dry mix and water shortly before or in the continuous mixing device. Preferably, the aqueous composition is added directly into the continuous mixing device.
The continuous mixer is preferably mounted on a movable printing head.

The printing head preferably comprises a delivery nozzle for the layer-by-layer application of the inorganic binder composition. The continuous mixer is mounted on the movable printing head preferably in direct association with this delivery nozzle.
The dimensions and the weight of the continuous mixer are preferably adapted to the size of the printing head. It is advantageous, accordingly, if the mixer in a printing facility for relatively small shaped parts is also smaller than the mixer in a printing facility for large shaped parts such as house parts or walls.
With the continuous mixer, the aqueous composition of the present invention is mixed very rapidly, efficiently, and uniformly into the dry mix or into the mixture of dry mix with water. This is important so that the inorganic binder composition on layer-by-layer application is uniform and cures evenly and rapidly.
The mixing of the dry mix or the mixture of dry mix and water with the aqueous composition in the mixing region takes place preferably at a stirring shaft speed of 500 to 3000 revolutions per minute, more preferably of 650 to 2500 revolutions per minute, more preferably still of 800 to 2000 revolutions per minute, most preferably of 1000 to 1500 revolutions per minute.
Mixing at high speed produces a rapid and efficient mixing of the dry mix or the mixture of dry mix and water with the aqueous composition.
The residence time of the inorganic binder composition in the mixer is preferably less than 10 s, more preferably less than 7 s, very preferably less than 4 s. The residence time of the inorganic binder composition in the mixing device is the average period of time for which a particle resides in the mixing device, from the inlet to the outlet.
The inorganic binder composition of the present invention is applied preferably by way of a movable printing head. The printing head in particular possesses at least one delivery aperture, which may be identical to the outlet of the continuous mixer, through which the curable material can be delivered.
The high sag resistance of the applied layers makes it unnecessary for formwork panels to be carried along at the delivery aperture of the printing head. In the case of specific applications, however, it may be advantageous for formwork panels to be carried along directly at the delivery aperture.

At the delivery aperture there is preferably a delivery nozzle which shapes the material delivered. There is no restriction on the shape, though it ought to be adapted to the maximum particle size of the material to be delivered.
The delivery nozzle preferably has a rectangular, square or round shape.
There may be further shaping elements mounted in the delivery nozzle.
The printing head can be moved in one, two or three spatial directions. Particularly preferred is a printing head which can be moved in three spatial directions. This allows shaped bodies of virtually any desired shape to be produced in a particularly simple way.
The movement of the printing head may be realized in particular by the mounting of the printing head on a conventional robotic arm which can be moved in one, two or three spatial directions.
The printing head is preferably located on a 3-axis portal robot system. This allows the rapid printing even of large shaped bodies with flexible shaping. Another possibility is to realize movements in one, two or three spatial directions through corresponding movements of the building space region. The building space region in this context is the region - a surface, for example - on which the shaped body is being constructed.

In a last aspectm the present invention also relates to a shaped body obtained by curing an inorganic binder composition as claimed above. Especially, the shaped article is manufactured in a process of additvie manufacturing, especially of 3D printing.
Shaped bodies can be produced surprisingly quickly by layer-by-layer application. The height of an individual layer, measured typically in a direction substantially perpendicular to the planes formed by individual layers, more particularly in a vertical direction, is preferably 1 mm to 200 mm, more preferably 5 mm to 100 mm, more particularly 10 mm to 50 mm.
The total height of the shaped body, or the thickness of all the individual layers of the shaped body taken together, is preferably 0.01 m to 100 m or more, more preferably 0.1 m to 80 m, more preferably still 0.3 m to 30 m, more particularly 0.5 m to 10 m.
While it is still workable, the surface of the shaped body may, using suitable tools, be smoothed, corrected or specially deformed. This may take place as part of the mechanical fabrication, or manually as a separate step. The surface may also be provided with a functional or decorative coating, such as with a paint, for example.
While it is still workable, the shaped body may also be cut using suitable tools. Thus, it is possible for holes, especially for window openings, door openings, conduit passages, or else cuts, especially for later working steps, to be made in the shaped body.
The shaped body may have almost any desired form. The shaped body is, for example, an edifice, a fabricated part for an edifice, a construction element, a masonry construction, a bridge, a column, a decorative element such as, for example, artificial hills, reefs or sculptures, a pond, a well, or a trough. The shaped body in this case may represent a solid shape or a hollow shape, with or without a base.
The shaped body may be produced directly on site and no longer moved after the application. Alternatively, the shaped body may be produced at another site, especially in a plant. This is done preferably on a base to which the shaped body does not attach. After it has cured, the shape body can be transported to the desired site.

## Claims

1. Aqueous composition, preferably an aqueous emulsion, comprising
a) 25 - 55, preferably 30 - 50 weight-%, especially 40 - 45 weight-% of at least one anionic polymer selected from the group consisting of plasticizers, water reducers, superplasticizers and workability retainers for inorganic binders,
b) 15 - 35 weight-%, preferably 20 - 30 weight-% of at least one water insoluble liquid defoamer, and
c) 1 - 10 weight-%, preferably 2 - 5 weight-% of at least one retarder, based on 100 weight-% of the aqueous composition.

2. Aqueous composition according to claim 1, **characterized in that** the at least one anionic polymer is a copolymer having a polymer backbone and side chains bonded thereto, the copolymer comprising at least one ionizable monomer unit **M1** and at least one side chain-bearing monomer unit **M2.**

3. Aqueous composition according to any of the preceding claims, **characterized in that** the water insoluble liquid defoamer is selected from the group consisting of mineral oils, vegetable oils, or white oils which may comprise a wax and/or hydrophobic silica, silicones, which can be modified by alkoxylation or fluorination, alkyl esters of phosphoric or phosphonic acid, especially triisobutyl phosphate or tributyl phosphate, alkoxylated polyols, especially ethoxylated diols, fatty acid based defoamers, especially mono- and diglycerides of fatty acids, and alkoxylated fatty alcohols.

4. Aqueous composition according to any of the preceding claims, **characterized in that** the at least one retarder is selected from the group consisting of sugar acids, sugars, sugar alcohols, and hydroxycarboxylic acids.

5. Aqueous composition according to any of claims 2 - 4, **characterized in that** the at least one anionic polymer has a nonrandom distribution of the monomer units **M1** and/or the monomer units **M2** in a direction along the polymer backbone.

6. Aqueous composition according to any of claims 1, 3, 4 and 5,
**characterized in that** it comprises a first and a second anionic polymer, each anionic polymer being a copolymer having a polymer backbone and side chains bonded thereto, each copolymer comprising at least one ionizable monomer unit **M1** and at least one side chain-bearing monomer unit **M2,** wherein the first anionic polymer has a random distribution of the monomer units **M1** and/or the monomer units **M2** in a direction along the polymer backbone,
and wherein the second anionic polymer has a nonrandom distribution of the monomer units **M1** and/or the monomer units **M2** in a direction along the polymer backbone.

7. Aqueous composition according to any of claims 5 and 6, **characterized in that** the nonrandom distribution of monomers M1 and M2 in the copolymer is in form of blocks, wherein the ionizable monomer units **M1** are present essentially in at least one first block **A** and the side chain-bearing monomer units **M2** are present essentially in at least one second block **B.**

8. Aqueous composition according to any of claims 5 and 6, **characterized in that** the nonrandom distribution of monomers M1 and M2 in the copolymer is in form of a gradient in at least one section **AA** in a direction along the polymer backbone with respect to the molar ratio of the ionizable monomer unit **M1** to the side chain-bearing monomer unit **M2.**

9. Aqueous composition according to any of claims 2, and 5 - 8, **characterized in that** the ionizable monomer unit **M1** in the copolymer has a structure of the formula I 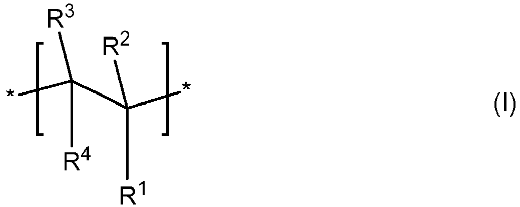 and the side chain-bearing monomer unit **M2** has a structure of the formula II 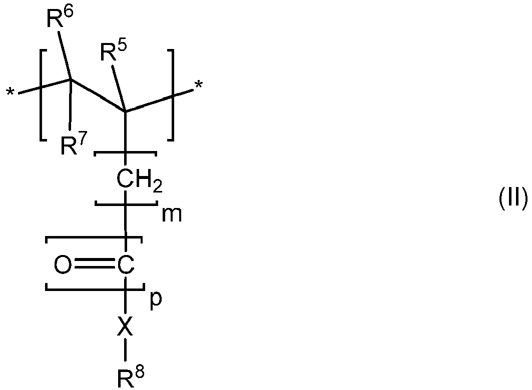 where
R¹, in each case independently, is -COOM, -SO₂-OM,
-O-PO(OM)₂ and/or -PO(OM)₂,
R², R³, R⁵ and R⁶, in each case independently, are H or an alkyl group having 1 to 5 carbon atoms,
R⁴ and R⁷, in each case independently, are H, -COOM or an alkyl group having 1 to 5 carbon atoms,
or where R¹ forms a ring together with R⁴ to give -CO-O-CO-,
M, independently of one another, represents H⁺, an alkali metal ion, an alkaline earth metal ion, a di- or trivalent metal ion, an ammonium ion or an organic ammonium group;
m = 0, 1 or 2,
p = 0 or 1,
X, in each case independently, is -O- or -NH-,
R⁸ is a group of the formula -[AO]ₙ-R^{a}
where A = C₂- to C₄-alkylene, R^{a} is H, a C₁- to C₂₀-alkyl
group, -cycloalkyl group or -alkylaryl group,
and n = 2-250, especially 10-200.

10. Aqueous composition according to any one of the preceding claims, **characterized in that** it additionally comprises 5 - 15 weight-%, preferably 8 - 12 weight-% of a cationic linear polyamine, based on 100 weight-% of the aqueous composition.

11. Use of the aqueous composition according to any one of the proceding claims in the preparation of an inorganic binder composition, particularly a binder compositions comprising cement.

12. An inorganic binder composition comprising
a) an inorganic binder, preferably at least one cement,
b) at least one aggregate, preferably sand,
c) optionally at least one further additive,
d) optionally water, and
e) an aqueous composition as claimed in any of claims 1 - 10 in an amount of 0.5 - 10 weight-%, preferably 1 - 5 weight-%, based on the total dry weight of the inorganic binder composition.

13. A method for the preparation of an inorganic binder composition as claimed in claim 12, **characterized in that** it comprises the steps of
1) providing a dry mix comprising an inorganic binder, preferably at least one cement, at least one aggregate, preferably sand, and optionally at least one further additive,
2) optionally mixing said dry mix with water,
3) mixing the dry mix or the mixture of dry mix and water with an aqueous composition as claimed in any of claims 1 - 10.

14. A method as claimed in claim 13, **characterized in that** the mixing in step 3) is done in a continuous mixer.

15. A method as claimed in any of claims 13 or 14, **characterized in that** it is part of a process of additive manufacturing, preferably of printing a 3D object.

16. Shaped body obtained by curing an inorganic binder composition of claim 12.
